# EUROPÄISCHE PATENTSCHRIFT

(11) **EP 1 533 176 B1**
(45) Veröffentlichungstag und Bekanntmachung des Hinweises auf die Patenterteilung: **30.06.2010**
(21) Anmeldenummer: 04105532.8
(22) Anmeldetag: 04.11.2004
(51) Int. Cl.: B60N 2/16, B60N 2/52, B60N 2/00, B60N 2/02

(54) **Fahrzeugsitz mit automatischer Höheneinstellung und Verfahren hierfür**
Vehicle seat with automatic height adjustment and method therefore
Siège de véhicule à ajustement automatique en hauteur et procédé correspondant

(30) Priorität: 22.11.2003 DE 10354635
(43) Veröffentlichungstag der Anmeldung: 25.05.2005
(73) Patentinhaber: GRAMMER AG, 92224 Amberg (DE)
(72) Erfinder: Meier, Johann, 92269, Fensterbach (DE); Burger, Thomas, 92507, Nabburg (DE); Hofmann, Marco, 92256, Hahnbach (DE)
(74) Vertreter: Hannke, Christian

(56) Entgegenhaltungen:
- DE-A1- 3 312 732
- DE-A1- 4 116 483
- DE-C1- 4 025 183

## Beschreibung

Die Erfindung betrifft einen Fahrzeugsitz mit mindestens einer zwischen einem Sitzrahmen und einem Grundrahmen angeordneten, schwingungsdämpfenden und sitzhöheneinstellenden Gasfeder, einer Ventileinrichtung zur Einstellung des Drucks in der Gasfeder gemäß dem Oberbegriff des Patentanspruches 1 wie er z.B. aus der DE 41 16 483 A1 bekannt ist. Die DE 40 25 183 C1 offenbart weiterhin einen dem Fahrzeugsitz zugeordneten Kompressor mit einem Antriebsmotor zum Beaufschlagen der Gasfeder mit Druckgas wo zwischen dem Sitzrahmen und dem Grundrahmen eine Gurtaufrollvorrichtung mit einem auf einer Achse aufgerollten Gurt angeordnet ist, dessen erstes Ende an einem am Sitzrahmen angeordneten Gurtaufrollmechanismus und dessen zweites Ende am Grundrahmen befestigt ist. Eine Gurtrollbewegung wird durch einen Detektor, der an dem Sitzrahmen befestigt ist, detektiert. Weiterhin betrifft die Erfindung ein Verfahren zur automatischen Höheneinstellung gemäß dem aus der DE 41 16 483 A1 bekannten Oberbegriff des Patentanspruches 11.

In der DE 40 25 183 C1 wird in Verbindung mit einem Fahrzeugsitz die Verwendung eines Kompressors und eines Antriebsmotors für den Kompressor beschrieben, die direkt am Fahrzeugsitz vorgesehen sind. Dadurch ergibt sich ein drucksystemautonomer Fahrzeugsitz, der in jedem beliebigen Fahrzeug einbaubar ist. Es ist also nicht erforderlich, dass das Fahrzeug, mit welchem der Fahrzeugsitz bestückt werden soll, eine eigene Druckquelle aufweist. Zusätzlich wird als Ventileinrichtung ein nur zum Luftablassen aus der Gasfeder dienendes 2/2-Wegventil und ein zwischen der Gasfeder und einer Kupplung der Gurtaufrollvorrichtung angeordnetes 3/2-Wegventil verwendet.

Derartige Fahrzeugsitze werden üblicherweise durch Betätigung von Handgriffen, die an dem Fahrzeugsitz angeordnet sind, in ihrer Höhen- und Gewichtsbelastungseinstellung neu eingestellt, um ein in Abhängigkeit von dem Gewicht einer Person, dem Fahrbahnzustand, dem Ladezustand des Fahrzeuges und/oder dem Druckveränderungszustand innerhalb der Gasfeder optimales federndes System für den Fahrer zu erhalten. Die Betätigung derartiger Handgriffe setzt voraus, dass ein den Fahrzeugsitz belegender Fahrer rechtzeitig daran denkt, diese Betätigung durchzuführen.

Demzufolge liegt der vorliegenden Erfindung die Aufgabe zugrunde, einen Fahrzeugsitz mit Höheneinstellung und ein Verfahren hierfür zur Verfügung zu stellen, welcher/welches einen erhöhten Komfort für eine den Fahrzeugsitz benutzende Person ermöglichen.

Diese Aufgabe wird vorrichtungsseitig durch die Merkmale des Patentanspruches 1 und verfahrensseitig durch die Merkmale des Patentanspruches 11 gelöst.

Kerngedanke der Erfindung ist es, dass bei einem Fahrzeugsitz mit mindestens einer zwischen einem Sitzrahmen und einem Grundrahmen angeordneten, schwingungsdämpfenden und sitzhöheneinstellbaren Gasfeder, einer Ventileinrichtung zur Einstellung des Druckes in der Gasfeder und einem dem Fahrzeugsitz zugeordneten Kompressor mit Antriebsmotor zum Beaufschlagen der Gasfeder mit Druckgas eine elektronische Steuereinheit verwendet wird, um detektierte Signale einer Gurtrollbewegung, die auf die Bewegung eines Gurtaufrollmechanismus und dessen zwischen dem Sitzrahmen und dem Grundrahmen angeordneten Gurtes zurückgehen, für einen vorbestimmten Zeitabschnitt auswertet und die Ventileinrichtung derart steuert, dass eine automatische, zeitverzögerte Sitzhöhenneueinstellung stattfindet. Diese Sitzhöhenneueinstellung findet dann statt, wenn der für den Zeitabschnitt bestimmte Sitzhöhenverlauf bezüglich einer vorbestimmbaren mittleren Sitzhöhe außerhalb einer Symmetrielage liegt.

Demzufolge kann anhand der detektierten Gurtrollbewegungssignale ein innerhalb des Zeitabschnittes bestehender Sitzhöhenverlauf bestimmt werden und dieser in seiner Lage im Verhältnis zu der vorbestimmten mittleren Sitzhöhe analysiert werden, um bei Vorliegen einer Lage außerhalb der Symmetrielage automatisch eine Sitzhöhenneueinstellung durchzuführen. Eine derartige automatische Sitzhöhenneueinstellung ermöglicht einen erhöhten Komfort für die den Sitz belegende Person, da es nicht mehr notwendig ist, zusätzlich Handgriffe zu betätigen, um eine für das Personengewicht und/oder den Fahrbandzustand und/oder den Druckveränderungszustand der Gasfeder und/oder eine Veränderung der örtlichen Gewichtsbelastung durch die Person passende Sitzhöhenneueinstellung zu erreichen.

Der Gurtaufrollmechanismus ist als Gurtaufrollvorrichtung zwischen dem obenliegenden Sitzrahmen und dem untenliegenden Grundrahmen angeordnet, wobei der um eine Achse aufgerollte Gurt mit einem ersten Ende an dem Gurtaufrollmechanismus, welcher an dem Sitzrahmen angeordnet ist, und mit einem zweiten Ende am Grundrahmen befestigt ist. Ein die Gurtrollbewegungen detektierender Detektor arbeitet mit einem sich mit der Gurtrollbewegung mitbewegenden Magnetband zusammen, welches an dem Gurtaufrollmechanismus umfangsseitig auf einer Rolle angebracht ist. Auf diese Weise kann der ortsfeste Detektor die momentane Drehstellung der Gurtrolle beziehungsweise des darauf angebrachten Magnetbandes detektieren. Dies lässt eine Ermittlung der Gurtrollbewegung zu, die wiederum synchron zu einer auf- und abwärts gerichteten Schwingbewegung des Sitzrahmens gegenüber dem ortsfesten Grundrahmen verläuft.

Um eine automatische Sitzhöhenneueinstellung bei einem Fahrerwechsel durchführen zu können, weist der Fahrzeugsitz eine Einrichtung zur Erkennung einer Sitzbelegung auf, die Sitzbelegungssignale an die elektronische Steuereinheit sendet. Die Sitzbelegungserkennung wird automatisch aktiviert, sobald sich nach dem vorbestimmten Zeitabschnitt, der einer Mindestzeitspanne entspricht, in welcher der Fahrzeugsitz unbelegt ist, ein neuer Fahrer auf den Fahrzeugsitz setzt. Bevorzugte Werte für die Mindestzeitspanne sind 7 sec. oder mehr.

Sobald eine derartige Mindestzeitspanne abgelaufen ist, steuert eine erste Ansteuereinrichtung der elektronischen Steuereinheit die Ventileinrichtung und/oder Kompressor derart an, dass der Fahrzeugsitz unabhängig von dem Gewicht des Fahrers von unten kommend auf die vorbestimmte mittlere Sitzhöhe eingestellt wird. Dies hat zur Folge, dass eine vollautomatische und präzise Sitzhöhenneueinstellung bei einem Fahrerwechsel stattfindet, sofern zwischen den Belegungszeitpunkten durch den alten und neuen Fahrer mindestens 7 sec. vergangen sind. Wenn hingegen die verstrichene Zeit weniger als 7 sec. ist, wird dies als kurzzeitiges Aufstehen des Fahrzeugfahrers beispielsweise in einem Traktor oder einer Baumaschine interpretiert. Ein derartiges kurzzeitiges Aufstehen erfordert jedoch nicht eine Neueinstellung der Sitzhöhe. Demzufolge findet eine derartige Sitzhöhenneueinstellung erst nach Überschreiten der vorbestimmten Mindestzeitspanne statt.

Zudem findet eine derartige unabhängig von dem Gewicht des Fahrers immer auf die gleiche vorbestimmte mittlere Sitzhöhe ausgerichtete Sitznivellierung vorzugsweise automatisch noch während des stehenden Zustandes des Fahrzeuges statt.

Gemäß einer weiteren bevorzugten Ausführungsform ist der vorbestimmte Zeitabschnitt eine Maximalzeitspanne, in welcher während der Fahrt eine Gewichtsverlagerung durch die den Fahrzeugsitz belegende Person oder eine unerwünschte Druckveränderung innerhalb der Gasfeder stattfindet. Eine derartige Maximalzeitspanne liegt bei ca. 10 sec. oder weniger. Somit kann bei einem Luftverlust einer auf Luft basierenden Gasfeder dieser durch eine entsprechende Sitzhöhenneueinstellung kompensiert werden. Auch eine Gewichtsverlagerung des Fahrers, die zu einer Verschiebung des Sitzhöhenverlaufes gegenüber der vorbestimmten mittleren Sitzhöhe führen kann, kann hierdurch kompensiert werden.

Um derartige Abweichungen von der vorbestimmten mittleren Sitzhöhe automatisch auszugleichen, weist die elektronische Steuereinheit eine zweite Ansteuereinrichtung auf. Eine derartige Ansteuereinrichtung steuert die Ventileinrichtung und/oder Kompressor nach Ablauf der Maximalzeitspanne für eine Sitzhöhenneueinstellung derart an, dass eine Höhenschwingungsbewegung des Fahrzeugsitzes als Sitzhöhenverlauf symmetrisch um die mittlere Sitzhöhe eingestellt wird. Das heißt, die Kurve der Höhenschwingungsbewegung wird aus ihrer Abweichungsposition zurück auf das Niveau der mittleren Sitzhöhe automatisch verschoben.

Gemäß einer dritten bevorzugten Ausführungsform kann der vorbestimmte Zeitabschnitt eine weitere Zeitspanne sein, in welcher während der Fahrt der Sitzhöhenverlauf als Schwingungsverlauf der Höhenschwingungsbewegung des Fahrzeugsitzes eine asymmetrische Verschiebung gegenüber der vorbestimmten mittleren Sitzhöhe aufgrund eines spezifischen Fahrbahnzustandes und/oder einer Fahrweise und/oder eines spezifischen Gewichtsbelastungszustandes des Fahrzeuges stattfindet. Hierfür weist die elektronische Steuereinheit eine dritte Ansteuereinrichtung auf, die nach Ablauf der weiteren Zeitspanne die Ventileinrichtung und/oder Kompressor derart ansteuert, dass die vorbestimmte mittlere Sitzhöhe neu eingestellt wird. Somit wird die Mittellage des gedämpften Fahrzeugsitzes gegenüber der bisher eingestellten Mittellage nach oben oder nach unten verschoben, je nachdem, ob eine asymmetrische Verschiebung der Schwingungskurve der Höhenschwingungsbewegung des Sitzes nach oben oder unten orientiert ist.

Bei einem Verfahren zur automatischen Sitzhöheneinstellung eines derartigen Fahrzeugsitzes werden gemäß einem ersten Schritt nach Ablauf des vorbestimmten Zeitabschnittes mittels der elektronischen Steuereinheit die detektierten Gurtrollbewegungssignale ausgewertet und daraus ein Sitzhöhenverlauf innerhalb des Zeitabschnittes bestimmt. In einem zweiten Schritt steuert die elektronische Steuereinheit die Ventileinrichtung und/oder Kompressor derart, dass diese automatisch die Sitzhöhe zeitverzögert neu einstellt, sobald der zuvor bestimmte Sitzhöhenverlauf außerhalb eines gegenüber einer vorbestimmten mittleren Sitzhöhe angeordneten Symmetrielage liegt.

Vorteilhaft kann das Verfahren bei stehendem Fahrzeug den Schritt des automatischen Einstellens der Sitzhöhe, sofern ein Fahrerwechsel stattfindet, beinhalten. Hierfür wird automatisch der Fahrzeugsitz - also der Sitzrahmen gegenüber dem Grundrahmen - von unten kommend auf die vorbestimmte mittlere Sitzhöhe eingestellt, nachdem innerhalb des vorbestimmten Zeitabschnittes keine Sitzbelegung detektiert worden ist.

Weiterhin wird bei fahrendem Fahrzeug der Fahrzeugsitz automatisch auf eine neue Sitzhöhe dann eingestellt, wenn die Schwingungskurve der Höhenschwingungsbewegung des Fahrzeugsitzes gegenüber der vorbestimmten mittleren Sitzhöhe verschoben ist.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Querschnittsansicht wesentliche Teile eines gedämpften Fahrzeugsitzes gemäß einer Ausführungsform der Erfindung;
- Fig. 2: in einer schematischen Darstellung einen Fahrzeugsitz gemäß einer ersten Ausführungsform der Erfindung mit einer Sitzhöhenneueinstellung nach Fahrerwechsel;
- Fig. 3: in einer schematischen Darstellung einen Fahrzeugsitz gemäß einer zweiten Ausführungsform der Erfindung mit einer automatischen Sitzhöhenneueinstellung nach einem stattgefundenen Luftverlust oder Gewichtsverlagerungsvorgang innerhalb einer Maximalzeitspanne;
- Fig. 4: in einer schematischen Darstellung einen Fahrzeugsitz gemäß einer vierten Ausführungsform der Erfindung mit einer automatischen Sitzhöheneinstellung nach Vorliegen eines asymmetrischen Schwingverhaltens;
- Fig. 5: ein Blockschaltbild des erfindungsgemäßen Fahrzeugsitzes; und
- Fig. 6: eine schematische Darstellung verschieden möglicher Sitzhöhenneueinstellungen.

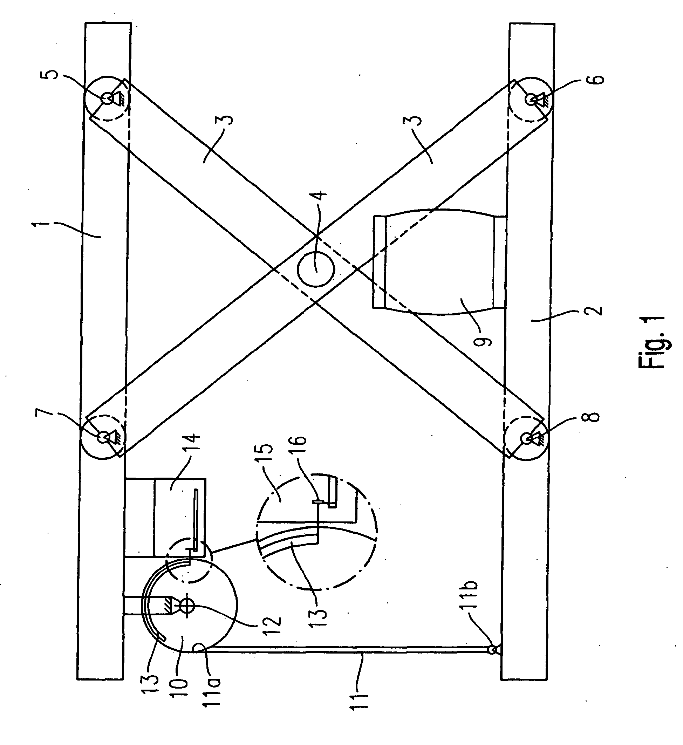

In Fig. 1 werden wesentliche Teile eines Fahrzeugsitzes gezeigt. Ein Sitzrahmen 1 ist mit einem Grundrahmen 2 über Schwingen 3, die in einem Schwingenlager 4 miteinander verbunden sind, miteinander verbunden. Hierfür sind in dem Sitzrahmen 1 und dem Grundrahmen 2 Festlager 5 und 6 sowie Loslager 7 und 8 angeordnet.

Eine Luftfeder 9 ist schematisch angedeutet und fluidisch mit einem von einem Antriebsmotor antreibbaren Kompressor verbunden.

Ein Gurtaufrollmechanismus 10 ist mit einem Gurt 11 verbunden, dessen oberes erstes Ende 11a mit dem Gurtaufrollmechanismus in Kontakt steht und dessen unteres zweites Ende 11b mit dem Grundrahmen verbunden ist. Auf diese Weise wird eine Höhen- beziehungsweise Abstandsveränderung des Sitzrahmens gegenüber dem Grundrahmen in eine Drehbewegung des federbelasteten Gurtaufrollmechanismusses, der um eine Achse 12 drehbar gelagert ist, umgewandelt.

Um eine Detektion der Gurtaufrollbewegungen durchführen zu können, weist der rollenartige Gurtaufrollmechanismus 10 umfangsseitig einen Magnetstreifen 13 auf, dessen einzelne Positionen durch einen am Sitzrahmen ortsfest angebrachten Detektor 16, der innerhalb einer elektronischen Steuereinheit 14 angeordnet ist, detektiert werden können. Dies wird in der mit dem Bezugszeichen 15 bezeichneten vergrößerten Abbildung deutlich dargestellt.

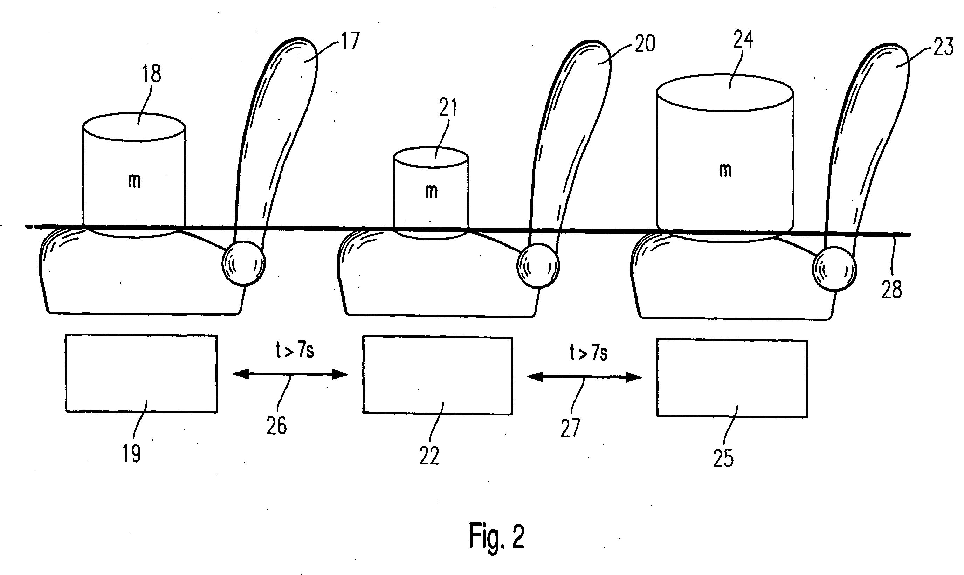

In Fig. 2 wird eine erste Ausführungsform des erfindungsgemäßen Fahrzeugsitzes nach der Durchführung einer Sitzhöhenneueinstellung bei Fahrerwechsel gezeigt. Ein Fahrzeugsitz 17 wird von einem Fahrer mit einem ersten Gewicht 18 belegt. Hierbei weist der Fahrzeugsitz einen Anfahrweg auf, wie er durch das Bezugszeichen 19 dargestellt wird.

Sobald nach Ablauf einer Mindestzeitspanne von 7 sec. (vgl. Bezugszeichen 26) keine Sitzbelegung durch eine automatische aktivierbare Sitzbelegungseinrichtung detektiert wird, findet bei einer erneuten Sitzbelegung des Fahrzeugsitzes 20 durch einen Fahrer mit einem geringeren Gewicht 21 eine neue Sitzhöheneinstellung statt. Hierfür wird für eine exakte Positionierung des Fahrzeugsitzes bezüglich einer vorbestimmten Niveaulage 28 der Fahrzeugsitz von unten nach oben an die Niveaulage 28 vollautomatisch angesteuert.

Nach Ablauf weiterer 7 sec. (Bezugszeichen 27), in welchen keine Sitzbelegung erkannt wurde, wird bei einer erneuten Sitzbelegung des Fahrzeugsitzes 23 mit einem Fahrer der Masse 24 wiederum automatisch das eingestellte Niveau 28 unabhängig von dem Gewicht des Fahrers angefahren. Die Bezugszeichen 22 und 25 geben den Anfahrweg von unten nach oben gehend wieder.

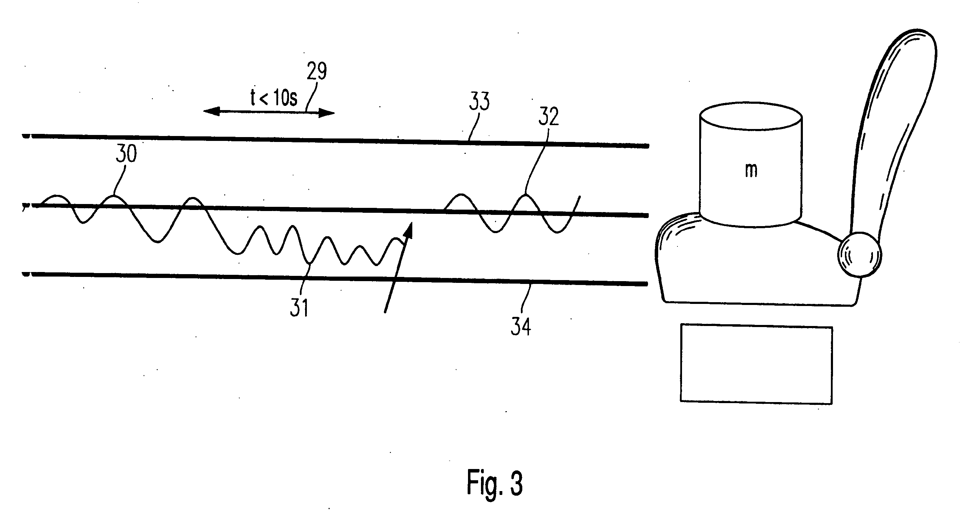

In Fig. 3 wird in einer schematischen Darstellung ein Fahrzeugsitz gemäß einer zweiten Ausführungsform der Erfindung mit einer Sitzhöhenneueinstellung gezeigt, wie sie bei auftretenden Abweichungen von dem eingestellten Niveau 28 durchgeführt wird. Wie der Fig. 3 zu entnehmen ist, wird während der Fahrt der Schwingungsverlauf des schwingungsgedämpften Fahrzeugsitzes innerhalb einer vorbestimmten Maximalzeitspanne 29 von höchstens 10 sec. beobachtet. In diesem Fall geht der anfangs in einer Symmetrielage zu der Niveau-Lage 28 liegende Schwingungsverlauf 30 in einen zu der Niveau-Lage 28 verschobenen Schwingungsverlauf 31 über. Sofern dieser verschobene Zustand, wie er beispielsweise aufgrund eines Luftverlustes innerhalb des Luftfedersystems oder einer Gewichtsverlagerung des Fahrers stattfinden kann, innerhalb der Maximalzeitspanne 29 fortlaufend andauert, wird bei einer erheblichen Abweichung eine Neueinstellung der Sitzhöhe durchgeführt, um wieder eine symmetrische Lage der Schwingungskurve gegenüber der Niveau-Lage 28 zu erreichen, wie es durch das Bezugszeichen 32 dargestellt wird. Das Dämpfungssystem weist zusätzlich eine maximale Ober- und Untergrenze 33 und 34 auf.

Auf diese Weise lässt sich der Luftverlust oder eine Gewichtsverlagerung des Fahrers kompensieren.

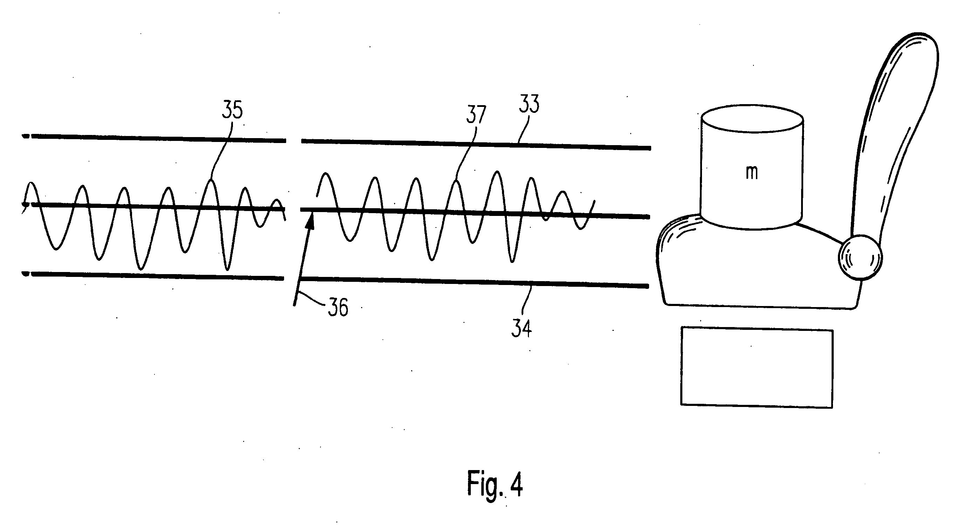

In Fig. 4 wird in einer schematischen Darstellung ein Fahrzeugsitz gemäß einer dritten Ausführungsform der Erfindung mit einer Sitzhöhenneueinstellung gezeigt, wie sie bei Vorliegen eines asymmetrischen Schwingverhaltens des Fahrzeugsitzes stattfindet. Wie der Fig. 4 zu entnehmen ist, liegt eine Schwingungskurve 35 beispielsweise aufgrund des Überfahrens einer Fahrbahn mit vielen Schlaglöchern asymmetrisch gegenüber der Niveau-Lage 28. In diesem Fall kann, wie durch den Pfeil 36 angedeutet, ein geringfügiges Anheben der Niveau-Lage 28 dazu führen, dass wiederum ein symmetrisches Schwingverhalten des Fahrzeugsitzes vorliegt, wie es durch die Schwingungskurve 37 wiedergegeben wird.

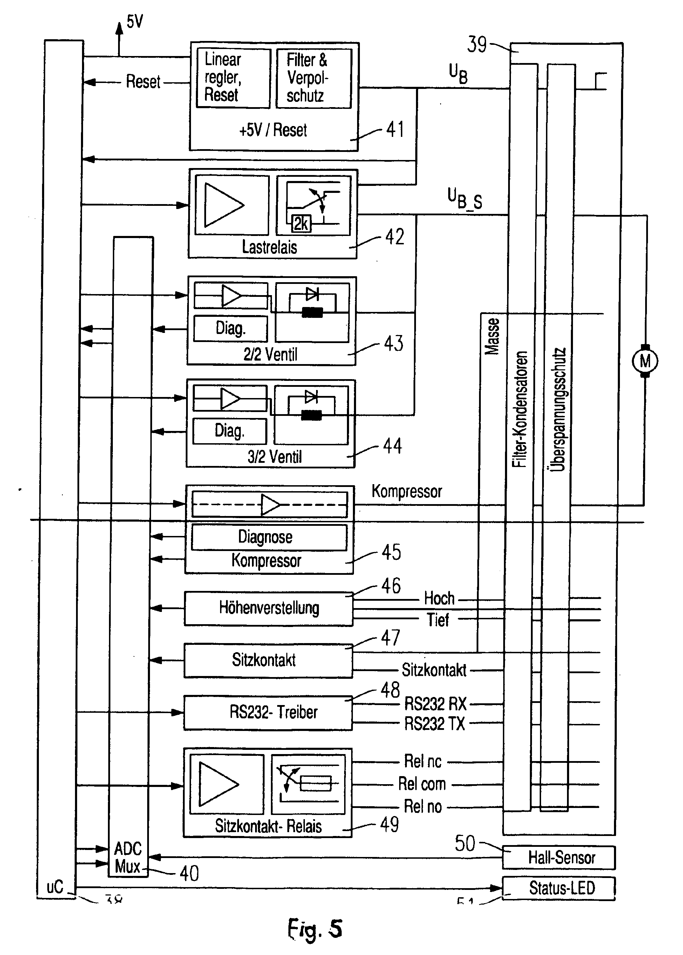

In Fig. 5 wird ein Blockschaltbild des erfindungsgemäßen Fahrzeugsitzes gezeigt. Dem Blockschaltbild ist zu entnehmen, dass eine elektronische Steuereinheit 38, 40 mit einer Reset-Einheit 41, einem Lastrelais 42, und einer Ventileinrichtung 43, 44 verbunden ist. Die Ventileinrichtung setzt sich aus einem 2/2-Wegeventil und einem 3/2-Wegeventil zusammen. Zusätzlich ist ein Kompressor 45, der dem Fahrzeugsitz zugeordnet ist, eine betätigbare Höhenverstelleinrichtung 46, eine automatische Sitzbelegerkennung 47, 49 mit einem Sitzkontakt und einem Sitzkontakt-Relais sowie eine Treibereinrichtung 48 über eine Steckereinrichtung 39 mit der Steuereinheit 38, 40 verbunden.

Neben einem Hall-Sensor 50 ist eine Status-LED 51 angeordnet, um den momentanen Zustand der Sitzhöheneinstellung anzuzeigen.

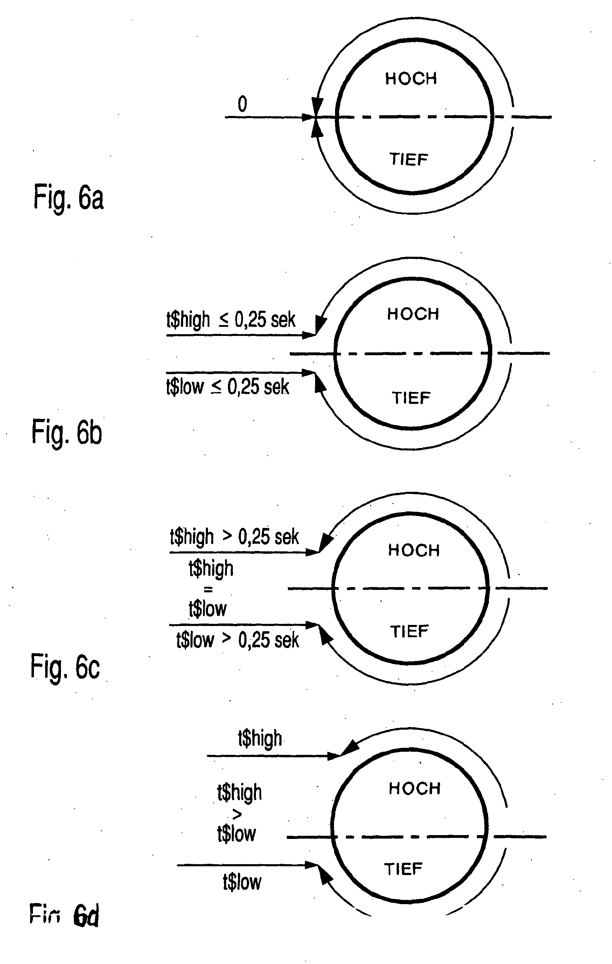

Unter Bezugnahme auf Fig. 6 wird nun die Steuerung einer möglichen Sitzhöhenneueinstellung (Nachregelung) gezeigt. Hierbei sind alle Einstellparameter als Variablen $ auszulegen, die später durch eine serielle Schnittstelle geändert werden können. Dies soll möglich sein, um eine Anpassung an die verschiedenen Sitztypen zu gewährleisten und die optimale Grundeinstellung zu finden.

Die Steuerung ist zeitabhängig und nicht wegabhängig zu sehen, da der verwendete Detektor nur zwischen einem Ein- und Aus-Zustand unterscheiden kann. Während eines manuellen Verstellvorganges der Sitzhöhe soll die Nachregelungssteuerung inaktiv geschaltet werden.

In Fig. 6a wird eine Nulllagenregelung dargestellt. Die Nulllage der Steuerung soll immer von unten mit dem Kompressor überfahren werden. In einem Bereich von 0,5 sec. unter und über der Mittellage soll die Steuerung inaktiv bleiben.

In Fig. 6b wird ein inaktives Federungsverhalten dargestellt. Befindet sich die Steuerung in einem Bereich von t$high ≤ 0,25 sec. und t$low ≤ 0,25 sec., so soll sie sich inaktiv in der Nachregelung verhalten.

In Fig. 6c wird die Nachregelung dargestellt. Sofern sich die Steuerung im Bereich von t$high > 0,25 sec. oder t$low > 0,25 sec. befindet, sollen die unterschiedlichen Werte der beiden verglichen werden. Wenn der Zustand von t$high = t$low ist, so soll keine Nachregelung erfolgen.

Wenn sich einer der Werte von dem anderen entfernt und mindestens den Wert t$multi = 2 erreicht (z.B. t$high ≥ t$multi = 2 x t$low), wie es in Fig. 6d dargestellt wird, so soll die Steuerung in einer Nachregelung beginnen, wenn zusätzlich folgende Ereignisse eingetreten sind.

Dieser Zustand soll sich mindestens 10 mal innerhalb einer Zeitspanne von 10 sec. ereignet haben. Nur wenn alle Variablen eingetreten sind, soll die Steuerung eine aktive Regelung beginnen.

Sämtliche in der Beschreibung erwähnten Merkmale sind als erfindungswesentlich anzusehen.

### Bezugszeichenliste

- 1: Sitzrahmen
- 2: Grundrahmen
- 3: Schwingen
- 4: Schwingenlager
- 5, 6: Festlager
- 7, 8: Loslager
- 9: Gasfeder
- 10: Gurtaufrollmechanismus
- 11: Gurt
- 11a: erstes Ende des Gurtes
- 11b: zweites Ende des Gurtes
- 12: Achse
- 13: Magnetband
- 14: elektronische Steuereinheit
- 15: Ausschnittsdarstellung
- 16: Sensor
- 17,20,23: Fahrzeugsitz
- 18,21,24: Personengewicht
- 19,22,25: Anfahrweg
- 26,27: Mindestzeitspanne
- 28: eingestellte Niveau-Lage
- 29: Maximalzeitspanne
- 30: Schwingungsverlauf vor Abweichung
- 31: Schwingungsverlauf während der Abweichung
- 32: Schwingungsverlauf nach Sitzhöhenneueinstellung
- 33,34: Ober- und Untergrenze
- 35: asymmetrischer Schwingungsverlauf
- 36: Neueinstellung des Schwingungsverlaufs
- 37: symmetrischer Schwingungsverlauf
- 38,40: elektronische Steuereinheit
- 39: Stecker
- 41: Reset-Einheit
- 42: Lastrelais
- 43: 2/2-Ventil
- 44: 3/2-Ventil
- 45: Kompressor
- 46: Höhenverstellung
- 47: Sitzkontakt
- 48: Treibereinrichtung
- 49: Sitzkontakt-Relais
- 50: Hall-Sensor
- 51: Status-LED

## Patentansprüche

1. Fahrzeugsitz mit mindestens einer zwischen einem Sitzrahmen (1) und einem Grundrahmen (2) angeordneten, schwingungsdämpfenden und sitzhöheneinsteilenden Gasfeder (9) und einer Ventileinrichtung (43, 44) zur Einstellung des Drucks in der Gasfeder (9),
**gekennzeichnet durch**
einen dem Fahrzeugsitz (17, 20, 23) zugeordneten Kompressor (45) mit einem Antriebsmotor zum Beaufschlagen der Gasfeder (9) mit Druckgas, wobei zwischen dem Sitzrahmen (1) und dem Grundrahmen (2) eine Gurtaufrollvorrichtung mit einem um eine Achse (12) aufgerollten Gurt (11) angeordnet ist, dessen erstes Ende (11a) an einem am Sitzrahmen (1) angeordneten Gurtaufrollmechanismus (10) und dessen zweites Ende (11 b) am Grundrahmen (2) befestigt ist, und ein eine Gurtrollbewegung detektierender Detektor (16) an dem Sitzrahmen (1) befestigt ist,
und
eine elektronische Steuereinheit (14, 38, 40) zum Auswerten von in einem vorbestimmten Zeitabschnitt (26, 27, 29) detektierten Gurtrollbewegungssignalen zur Bestimmung eines Sitzhöhenverlaufs innerhalb des Zeitabschnitts (26, 27, 29) und zum Steuern der Ventileinrichtung (43, 44) und/oder dem Kompressor (45) derart, dass eine automatische, zeitverzögerte Sitzhöhenneueinstellung auf die vorbestimmte mittlere Sitzhöhe stattfindet, sofern der bestimmte Sitzhöhenverlauf (31, 35) bezüglich einer vorbestimmbaren mittleren Sitzhöhe (28) außerhalb einer Symmetrielage liegt, wobei der Gurtaufrollmechanismus rollenartig ausgebildet ist und umfangsseitig einen Magnetstreifen (13) aufweist, dessen einzelne Positionen **durch** einen am Sitzrahmen ortsfest angebrachten Detektor (16) detektierbar sind.

2. Fahrzeugsitz nach Anspruch 1,
**gekennzeichnet durch**
eine Einrichtung (47, 49) zur Erkennung einer Sitzbelegung, die Sitzbelegungssignale an die elektronische Steuereinheit (14, 38, 40) sendet.

3. Fahrzeugsitz nach Anspruch 1 oder 2,
**dadurch gekennzeichnet, dass**
der vorbestimmte Zeitabschnitt (26, 27, 29) eine Mindestzeitspanne (26, 27) darstellt, in welcher der Fahrzeugsitz (17, 20, 23) unbelegt ist.

4. Fahrzeugsitz nach Anspruch 3,
**dadurch gekennzeichnet, dass**
die Mindestzeitspanne (26, 27) 7 sec. oder mehr beträgt.

5. Fahrzeugsitz nach Anspruch 3 oder 4,
**dadurch gekennzeichnet,dass**
die elektronische Steuereinheit (14, 38, 40) eine erste Ansteuereinrichtung umfasst, die nach Ablauf der Mindestzeitspanne (26, 27) die Ventileinrichtung (43, 44) und/oder dem Kompressor (45) für eine Sitzhöhenneueinstellung derart ansteuert, dass der Fahrzeugsitz (17, 20, 23) unabhängig von einem Gewicht einer den Fahrzeugsitz (17, 20, 23) belegenden Person von unten kommend auf die vorbestimmte mittlere Sitzhöhe (28) eingestellt ist.

6. Fahrzeugsitz nach einem der vorangegangenen Ansprüche,
**dadurch gekennzeichnet, dass**
der vorbestimmte Zeitabschnitt (26, 27, 29) eine Maximalzeitspanne (29) ist, in wel-cher während der Fahrt eine Gewichtsverlagerung durch eine den Fahrzeugsitz (17, 20, 23) belegende Person oder eine unerwünschte Druckveränderung innerhalb der Gasfeder (9) stattfindet.

7. Fahrzeugsitz nach Anspruch 6,
**dadurch gekennzeichnet, dass**
die Maximalzeitspanne (29) 10 sec. oder weniger beträgt.

8. Fahrzeugsitz nach Anspruch 6 oder 7,
**dadurch gekennzeichnet, dass**
die elektronische Steuereinheit (14, 38, 40) eine zweite Ansteuereinrichtung umfasst, die nach Ablauf der Maximalzeitspanne (29) die Ventileinrichtung (43, 44) und/oder dem Kompressor (45) für eine Sitzhöhenneueinstellung derart ansteuert, dass eine Höhenschwingungsbewegung des Fahrzeugsitzes (1) als Sitzhöhenverlauf (32) symmetrisch um die mittlere Sitzhöhe (28) stattfindet.

9. Fahrzeugsitz nach einem der vorangegangenen Ansprüche,
**dadurch gekennzeichnet, dass**
der vorbestimmte Zeitabschnitt (26, 27, 29) eine weitere Zeitspanne ist, in welcher während der Fahrt der Sitzhöhenverlauf (35) als Schwingungsverlauf einer Höhenschwingungsbewegung des Fahrzeugsitzes (17, 20, 23) eine asymmetrische Verschiebung gegenüber der vorbestimmbaren mittleren Sitzhöhe (28) aufgrund eines Fahrbahnzustandes und/oder einer Fahrweise und/oder eines Gewichtsbelastungszustandes des Fahrzeuges stattfindet.

10. Fahrzeugsitz nach Anspruch 9,
**dadurch gekennzeichnet, dass**
die elektronische Steuereinheit (14, 38, 40) eine dritte Ansteuereinrichtung umfasst, die nach Ablauf der weiteren Zeitspanne die Ventileinrichtung (43, 44) und/oder dem Kompressor (45) für eine Sitzhöhenneueinstellung derart ansteuert, dass die vorbestimmte mittlere Sitzhöhe (28) neu eingestellt wird.

11. Verfahren zum Einstellen einer neuen Sitzhöhe eines Fahrzeugsitzes mit mindestens einer zwischen einem Sitzrahmen (1) und einem Grundrahmen (2) angeordneten, schwingungsdämpfenden und sitzhöheneinstellenden Gasfeder (9) und einer Ventileinrichtung (43, 44) zur Einstellung des Druckes in der Gasfeder (9),
**gekennzeichnet durch**
einen dem Fahrzeugsitz (17, 20, 23) zugeordneten Kompressor (45) mit einem Antriebsmotor zum Beaufschlagen der Gasfeder (9) mit Druckgas, wobei zwischen dem Sitzrahmen (1) und dem Grundrahmen (2) eine Gurtaufrollvorrichtung mit einem auf eine Achse (12) aufgerollten Gurt (11) angeordnet ist, dessen erstes Ende (11a) an einem am Sitzrahmen (1) angeordneten Gurtaufrollmechanismus (10) und dessen zweites Ende (11b) am Grundrahmen (2) befestigt ist, ein eine Gurtrollbewegung detektierender Detektor (16) an dem Sitzrahmen (1) befestigt ist,
wobei
nach Ablauf eines vorbestimmten Zeitabschnittes (26, 27, 29) mittels einer elektronischen Steuereinheit (14, 38, 40) die detektierten Gurtrollbewegungesignale ausgewertet werden und daraus ein Sitzhöhenverlauf (31, 35) innerhalb des Zeitabschnitts (26, 27, 29) bestimmt wird, und die elektronische Steuereinheit (14, 38, 40) die Ventileinrichtung (43, 44) und/oder den Kompressor (45) derart steuert, dass diese automatisch die Sitzhöhe zeitverzögert neu auf die vorbestimmte mittlere Sitzhöhe einstellt, sobald der bestimmte Sifzhöhenverlauf außerhalb einer gegenüber einer vorbestimmbaren mittleren Sitzhöhe (28) angeordneten Symmetrielage liegt, wobei ein an dem rollenartig ausgebildeten Gurtaufrollmechanismus (10) umfangsseitig angebrachter Magnetstreifen (13) während einer Auf- und/oder Abwärtsbewegung des Sitzrahmens (1) einzelne Positionen gegenüber einem am Sitzrahmen (1) ortsfest angebrachten Detektor (16) einnimmt.

12. Verfahren nach Anspruch 11,
**dadurch gekennzeichnet, dass**
bei stehendem Fahrzeug der Fahrzeugsitz (17, 20, 23) automatisch von unten kommend auf die vorbestimmte mittlere Sitzhöhe (28) eingestellt wird, nachdem innerhalb des vorbestimmten Zeitabschnitts (26, 27) keine Sitzbelegung vorliegt.

13. Verfahren nach Anspruch 11 oder 12,
**dadurch gekennzeichnet, dass**
bei fahrendem Fahrzeug der Fahrzeugsitz (17, 20, 23) automatisch auf eine neue Sitzhöhe derart eingestellt wird, dass der Fahrzeugsitz (17, 20, 23) symmetrisch um die vorbestimmte mittlere Sitzhöhe (28) Höhenschwingungen durchführt.

14. Verfahren nach Anspruch 11 oder 12,
**dadurch gekennzeichnet, dass**
bei fahrendem Fahrzeug bei Vorliegen einer asymmetrischen Verschiebung der Höhenschwingungsbewegung (35) des Fahrzeugsitzes (17, 20, 23) die Sitzhöhe (28) verschoben wird.

## Claims

1. Vehicle seat comprising at least one gas spring (9) which damps vibration and adjusts the seat height, said gas spring being arranged between a seat frame (1) and a base frame (2), and comprising a valve arrangement (43, 44) for adjusting the pressure in the gas spring (9) **characterised in that** a compressor (45) assigned to the vehicle seat (17, 20, 23) having a drive motor for feeding compressed gas to the gas spring (9), wherein a belt roller device comprising a belt (11) rolled around an axle (12) is arranged between the seat frame (1) and the base frame (2), the first end (11 a) of said belt being attached to a belt roller mechanism (10) arranged on the seat frame (1) and the second end (11b) of said belt being attached to the base frame (2), and a detector (16) which detects a belt rolling movement is attached to the seat frame (1) and an electronic control unit (14, 38, 40) for evaluating belt rolling movement signals detected within a predefined time period (26, 27, 29) for determining a seat height profile within the time period (26, 27, 29) and for controlling the valve arrangement (43, 44) and/or the compressor (45) such that automatic, time-delayed seat height re-adjustment takes place if the determined seat height profile (31, 35) lies out of a position of symmetry in relation to a predefinable mean seat height (28), wherein the belt roller mechanism is shaped roller-like and comprises a magnetic strip (13) on its circumferential side, whose individual positions are detectable by a detector (16) which is stationary fixed to the seat frame.

2. Vehicle seat according to Claim 1, **characterized by** an arrangement (47, 49) for detecting occupancy of the seat, which arrangement transmits seat occupancy signals to the electronic control unit (14, 38, 40).

3. Vehicle seat according to Claim 1 or 2, **characterized in that** the predefined time period (26, 27, 29) is a minimum length of time (26, 27) in which the vehicle seat (17, 20, 23) is unoccupied.

4. Vehicle seat according to Claim 3, **characterized in that** the minimum length of time (26, 27) is 7 seconds or more.

5. Vehicle seat according to Claim 3 or 4, **characterized in that** the electronic control unit (14, 38, 40) comprises a first actuator arrangement which, following expiry of the minimum length of time (26, 27), controls the valve arrangement (43, 44) and/or the compressor (45) for seat height re-adjustment such that the vehicle seat (17, 20, 23) is adjusted from below to the predefined mean seat height (28) independently of a weight of a person occupying the vehicle seat (17, 20, 23).

6. Vehicle seat according to one of the preceding claims, **characterized in that** the predefined time period (26, 27, 29) is a maximum length of time (29) in which during travel a weight displacement by a person occupying the vehicle seat (17, 20, 23) or an undesirable pressure change within the gas spring (9) takes place.

7. Vehicle seat according to Claim 6, **characterized in that** the maximum length of time (29) is 10 seconds or less.

8. Vehicle seat according to Claim 6 or 7, **characterized in that** the electronic control unit (14, 38, 40) comprises a second actuator arrangement which, following expiry of the maximum length of time (29), controls the valve arrangement (43, 44) and/or the compressor (45) for seat height re-adjustment such that a height vibration movement of the vehicle seat (1) as seat height profile (32) takes place symmetrically around the mean seat height (28).

9. Vehicle seat according to one of the preceding claims, **characterized in that** the predefined time period (26, 27, 29) is a further length of time in which during travel the seat height profile (35) as vibration profile of a height vibration movement of the vehicle seat (17, 20, 23) is subjected to an asymmetrical shift with respect to the predefinable mean seat height (28) on account of a road condition and/or a manner of driving and/or a weight loading condition of the vehicle.

10. Vehicle seat according to Claim 9, **characterized in that** the electronic control unit (14, 38, 40) comprises a third actuator arrangement which, following expiry of the further length of time, controls the valve arrangement (43, 44) and/or the compressor (45) for seat height re-adjustment such that the predefined mean seat height (28) is re-adjusted.

11. Method of setting a new seat height of a vehicle seat comprising at least one gas spring (9) which damps vibration and adjusts the seat height, said gas spring being arranged between a seat frame (1) and a base frame (2), and comprising a valve arrangement (43, 44) for adjusting the pressure in the gas spring (9) **characterised by** a compressor which is (45) assigned to the vehicle seat (17, 20, 23), said compressor having a drive motor for feeding compressed gas to the gas spring (9), wherein a belt roller device comprising a belt (11) rolled around an axle (12) is arranged between the seat frame (1) and the base frame (2), the first end (11a) of said belt being attached to a belt roller mechanism (10) arranged on the seat frame (1) and the second end (11b) of said belt being attached to the base frame (2), and a detector (16) which detects a belt rolling movement is attached to the seat frame (1), wherein following expiry of a predefined time period (26, 27, 29), the detected belt rolling movement signals are evaluated by means of an electronic control unit (14, 38, 40) and a seat height profile (31, 35) within the time period (26, 27, 29) is determined therefrom, and the electronic control unit (14, 38, 40) controls the valve arrangement (43, 44) and/or the compressor (45) such that it automatically re-adjusts the seat height in a time-delayed manner as soon as the determined seat height profile lies out of a position of symmetry arranged with respect to a predefinable mean seat height (28), wherein a magnetic strip (13), which is circumferential attached to the roller-like belt roller mechanism, occupies individual positions during an upward and downward movement of the seat frame (1) relatively to a detector which is stationary fixed to the seat frame (1).

12. Method according to Claim 11, **characterized in that**, when the vehicle is stationary, the vehicle seat (17, 20, 23) is automatically set to the predefined mean seat height (28) from below if the seat is not occupied within the predefined time period (26, 27).

13. Method according to Claim 11 or 12, **characterized in that**, when the vehicle is moving, the vehicle seat (17, 20, 23) is automatically set to a new seat height such that the vehicle seat (17, 20, 23) carries out height vibrations in a symmetrical manner about the predefined mean seat height (28).

14. Method according to Claim 11 or 12, **characterized in that**, when the vehicle is moving, if there is an asymmetric shift in the height vibration movement (35) of the vehicle seat (17, 20, 23), the mean seat height (28) is shifted.

## Revendications

1. Siège de véhicule comprenant au moins un ressort pneumatique (9) d'amortissement des vibrations et d'ajustement de hauteur de siège, agencé entre un châssis de siège (1) et un châssis de base (2), et un agencement de soupape (43, 44) pour l'ajustement de la pression dans le ressort pneumatique (9),
**caractérisé en ce qu'**un compresseur (45) affecté au siège de véhicule (17, 20, 23) a un moteur d'entraînement pour alimenter le ressort pneumatique (9) en gaz comprimé, un dispositif de rouleau à courroie avec une courroie (11) enroulée autour d'un axe (12) étant agencé entre le châssis de siège (1) et le châssis de base (2), courroie dont une première extrémité (11a) est fixée à un mécanisme de rouleau à courroie (10) agencé sur le châssis de siège (1) et dont une deuxième extrémité (11b) est fixée au châssis de base (2), et un détecteur (16) détectant le mouvement de roulement de la courroie étant fixé au châssis de siège (1),
et **en ce qu'**une unité de commande électronique (14, 38, 40) évalue des signaux de mouvement de roulement de la courroie détectés pendant une période de temps prédéterminée (26, 27, 29) détermine un historique de hauteur de siège pendant la période de temps (26, 27, 29) et commande l'agencement de soupape (43, 44) et/ou le compresseur (45) de sorte qu'un réajustement retardé et automatique de hauteur de siège soit réalisé sur la hauteur de siège moyenne prédéterminée, si l'historique de hauteur de siège (31, 35) déterminé est situé hors d'une position symétrique par rapport à l'une hauteur de siège moyenne prédéterminable (28),
et **en ce que** le mécanisme de rouleau à courroie est conçu sous la forme d'un rouleau et possède une bande magnétique (13) sur la circonférence, dont les positions individuelles peuvent être détectées par un détecteur (16) agencé de manière fixe sur le châssis de siège.

2. Siège de véhicule selon la revendication 1, **caractérisé par** un agencement (47, 49) pour détecter une occupation de siège, qui envoie des signaux d'occupation de siège à l'unité de commande électronique (14, 38, 40).

3. Siège de véhicule selon la revendication 1 ou 2, **caractérisé en ce que** la période de temps prédéterminée (26, 27, 29) présente une durée minimum (26, 27) pendant laquelle le siège de véhicule (17, 20, 23) est inoccupé.

4. Siège de véhicule selon la revendication 3, **caractérisé en ce que** la durée minimum (26, 27) est de 7 secondes ou plus.

5. Siège de véhicule selon la revendication 3 ou 4, **caractérisé en ce que** l'unité de commande électronique (14, 38, 40) comprend un premier agencement d'actionnement, qui à la fin de la durée minimum (26, 27) commande l'agencement de soupape (43, 44) et/ou le compresseur (45) pour un réajustement de la hauteur de siège, de sorte que le siège de véhicule (17, 20, 23) soit indépendamment du poids d'une personne occupant le siège de véhicule (17, 20, 23), ajusté par en dessous à la hauteur de siège moyenne prédéterminée (28).

6. Siège de véhicule selon l'une quelconque des revendications précédentes, **caractérisé en ce que** la période de temps prédéterminée (26, 27, 29) est une durée maximum (29), pendant laquelle a lieu durant le trajet un déplacement de poids par une personne occupant le siège de véhicule (17, 20, 23) ou un changement de pression indésirable à l'intérieur du ressort pneumatique (9).

7. Siège de véhicule selon la revendication 6, **caractérisé en ce que** la durée maximum (29) est de 10 secondes ou moins.

8. Siège de véhicule selon la revendication 6 ou 7, **caractérisé en ce que** l'unité de commande électronique (14, 38, 40) comprend un deuxième agencement d'actionnement, qui commande l'agencement de soupape (43, 44) et/ou le compresseur (45) à la fin de la durée maximum (29) pour un réajustement de la hauteur de siège du sorte que le siège de véhicule (1) vibre en hauteur de façon à ce que l'historique de hauteur de siège (32) soit symétrique autour de la hauteur de siège moyenne (28).

9. Siège de véhicule selon l'une quelconque des revendications précédentes, **caractérisé en ce que** la période de temps prédéterminée (26, 27, 29) est une autre durée pendant laquelle durant le trajet l'historique de hauteur de siège (35) en tant qu'historique de vibrations d'un mouvement de vibrations en hauteur du siège de véhicule (17, 20, 23) est soumis à un glissement asymétrique par rapport à la hauteur de siège moyenne prédéterminable (28) à cause d'un état de la route et/ou d'un comportement de conduite et/ou d'un état de charge du véhicule.

10. Siège de véhicule selon la revendication 9, **caractérisé en ce que** l'unité de commande électronique (14, 38, 40) comprend un troisième agencement d'actionnement, qui commande l'agencement de soupape (43, 44) et/ou le compresseur (45) à la fin de l'autre durée pour un réajustement de hauteur de siège, de sorte que la hauteur de siège moyenne prédéterminée (28) soit réajustée.

11. Procédé d'ajustement d'une nouvelle hauteur de siège d'un siège de véhicule comprenant au moins un ressort pneumatique (9) d'amortissement des vibrations et d'ajustement de hauteur de siège, agencé entre un châssis de siège (1) et un châssis de base (2), et un agencement de soupape (43, 44) pour l'ajustement de la pression dans le ressort pneumatique (9),
**caractérisé en ce qu'**un compresseur (45) affecté au siège de véhicule (17, 20, 23) a un moteur d'entraînement pour alimenter le ressort pneumatique (9) en gaz comprimé, un dispositif de rouleau à courroie avec une courroie (11) enroulée autour d'un axe (12) étant agencé entre le châssis de siège (1) et le châssis de base (2), courroie dont une première extrémité (11a) est fixée à un mécanisme de rouleau à courroie (10) agencé sur le châssis de siège (1) et dont une deuxième extrémité (11b) est fixée au châssis de base (2), un détecteur (16) qui détectant le mouvement de roulement de la courroie étant fixé au châssis de siège (1),
et **en ce que**, à la fin d'une période de temps prédéterminée (26, 27, 29), les signaux de mouvement de roulement de la courroie détectés sont évalués au moyen d'une unité de commande électronique (14, 38, 40), évaluation à partir de laquelle un profil de hauteur de siège (31, 35) pendant la période de temps (26, 27, 29) est déterminé, et l'unité de commande électronique (14, 38, 40) commande l'agencement de soupape (43, 44) et/ou le compresseur (45), de sorte que celle-ci réajuste automatiquement la hauteur de siège de manière retardée à la hauteur de siège moyenne prédéterminée, dès que l'historique de hauteur de siège déterminé est situé hors d'une position symétrique aménagé par rapport à l'une hauteur de siège moyenne prédéterminable (28),
et **en ce qu'**une bande magnétique (13) agencée de manière périphérique sur le mécanisme de rouleau à courroie sous forme de rouleau (10) prend pendant un déplacement vers le haut ou vers le bas du châssis de siège (1), prend des positions individuelles par rapport à un détecteur (16) agencé de manière fixe sur le châssis de siège (1).

12. Procédé selon la revendication 11, **caractérisé en ce que** quand le véhicule est immobile, et par en dessous le siège de véhicule (17, 20, 23) est automatiquement placé si le siège n'est pas occupé pendant la période de temps prédéterminée (26, 27) à la hauteur de siège moyenne prédéterminée (28).

13. Procédé selon la revendication 11 ou 12, **caractérisé en ce que**, quand le véhicule est en mouvement, le siège de véhicule (17, 20, 23) est automatiquement placé à une nouvelle hauteur de siège de sorte que le siège de véhicule (17, 20, 23) vibre en hauteur de manière symétrique autour de la hauteur de siège moyenne prédéterminée (28).

14. Procédé selon la revendication 11 ou 12, **caractérisé en ce que**, quand le véhicule est en mouvement, s'il existe un glissement asymétrique du mouvement de vibrations en hauteur (35) du siège du véhicule (17, 20, 23), la hauteur de siège (28) est modifiée.
